# EUROPÄISCHE PATENTSCHRIFT

(11) **EP 3 326 753 B1**
(45) Veröffentlichungstag und Bekanntmachung des Hinweises auf die Patenterteilung: **12.01.2022**
(21) Anmeldenummer: 17202465.5
(22) Anmeldetag: 18.11.2017
(51) Int. Cl.: B24B 53/075, B24B 53/12, B24D 18/00

(54) **VERFAHREN ZUM ABRICHTEN EINER SCHLEIFSCHNECKE MITTELS EINER ABRICHTROLLE**
METHOD OF DRESSING A GRINDING WORM BY MEANS OF A DRESSING TOOL
PROCÉDÉ D'AJUSTEMENT D'UNE MEULE À VIS AU MOYEN D'UNE ROULETTE DE DRESSAGE

(30) Priorität: 28.11.2016 DE 102016014181
(43) Veröffentlichungstag der Anmeldung: 30.05.2018
(73) Patentinhaber: Kapp Werkzeugmaschinen GmbH, 96450 Coburg (DE); NILES Werkzeugmaschinen GmbH, 12681 Berlin (DE)
(72) Erfinder: Grinko, Sergiy, 96450 Coburg (DE)
(74) Vertreter: Gosdin, Michael

(56) Entgegenhaltungen:
- DE-A1- 19 910 746
- DE-A1-102010 045 836
- DE-U1- 9 107 089
- JP-A- 2005 271 127
- JP-A- 2006 212 726
- JP-A- 2010 099 783

## Beschreibung

Die Erfindung betrifft ein Verfahren zum Abrichten einer Schleifschnecke mittels einer Abrichtrolle, bei dem die mit einem abrasiven Profil versehene Abrichtrolle in Eingriff mit der Schleifschnecke gebracht wird, um deren schneckenförmiges Schleifprofil zu profilieren, wobei das abrasive Profil der Abrichtrolle im Radialschnitt zumindest abschnittsweise zahnförmig ausgebildet ist und sich radial von einem Fußbereich bis zu einem Kopfbereich erstreckt, wobei die Abrichtrolle erzeugt wird durch die Schritte:
a) Herstellen eines scheibenförmigen Grundkörpers, wobei der Grundkörper mit einer profilierten, im Radialschnitt zumindest abschnittsweise zahnförmig ausgebildeten Oberfläche für die Aufnahme einer Lage von Abrasivpartikeln versehen wird,
b) Anordnen einer Lage von Abrasivpartikeln auf der profilierten Oberfläche des Grundkörpers,
c) Profilieren des mit Abrasivpartikeln versehenen Grundkörpers, indem mit einem Profilierwerkzeug außenliegende Abschnitte der Abrasivpartikel so entfernt werden, dass sich das abrasive Profil (Soll-Profil) der Abrichtrolle ergibt.

Bei der Hartfeinbearbeitung von Verzahnungen oder Profilen, insbesondere im Falle einer Massen- oder Großserienfertigung, werden als Schleifwerkzeuge häufig abrichtbare Schleifschnecken eingesetzt. Um die benötigte Qualität des zu fertigenden Zahnrads aufrechtzuerhalten, d. h. Verschleiß an der Schleifschnecke auszugleichen und auch die gewünschte bzw. benötigte Oberflächenstruktur der Schleifflächen der Schleifschnecke bereitzustellen, werden Abrichtrollen eingesetzt, die zumeist diamantbelegt sind.

Bei der oben genannten Herstellung einer solchen Abrichtrolle wird ein präzise geschliffener Stahlgrundkörper mit einer Schicht Abrasivpartikel, meist in Form von Diamant-Körner, in einem galvanischen Prozess belegt.

In Abhängigkeit von der Qualität der erfolgten Belegung mit Abrasivpartikeln und der geforderten Oberflächengüte des zu schleifenden Zahnrads muss das Profil der Abrichtrolle nachbearbeitet werden. Die Nachbearbeitung erfolgt beispielsweise auf einer Koordinatenschleifmaschine mittels Diamantschleifscheiben entsprechend, wobei die Hüllkurve der Abrasivpartikel der Abrichtrolle mit dem theoretischen Soll-Profil versehen wird.

Je nach Zustellung bei der Nachbearbeitung werden entlang der Flankenhöhe der Abrichtrolle (d. h. vom Fußbereich bis zum Kopfbereich, s. o.) relativ gleiche Werte des Materialanteils erzeugt. Beim Einsatz der so hergestellten Abrichtrolle beim Abrichten der Schleifschnecke werden entlang der Flankenhöhe der Schnecke entsprechend relativ gleiche Werte des Materialanteils erzeugt.

Ist die Abrichtrolle auf diese Weise fertiggestellt, wird deren Profil beim Abrichten der Schleifschnecke auf diese übertragen und dann in der Folge beim Schleifen des Werkstücks das Profil der Schneckenflanken der Schleifschnecke auf das zu schleifende zahnradförmige Werkstück durch den Wälzschleifprozess übertragen. Demgemäß ist die Oberflächenrauheit in unterschiedlichen Bereichen der Zahnradflanke dann auch relativ gleich.

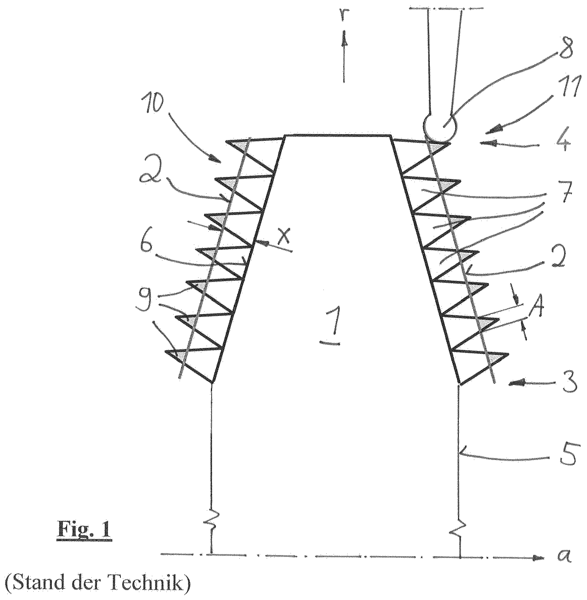

Dieses Vorgehen ist in Figur 1 illustriert. Zu erkennen ist hier der Radialschnitt durch einen Teil einer Abrichtrolle 1, die als scheibenförmiger Körper ausgebildet ist und beim Abrichten um eine Drehachse a rotiert. Die Abrichtrolle hat im radial außen liegenden Bereich ein zahnförmiges Profil, das sich von einem Fußbereich 3 bis zu einem Kopfbereich 4 in radiale Richtung r erstreckt. Der Grundkörper 5 der Abrichtrolle 1 ist als StahlGrundkörper ausgeführt und zunächst mit einer profilierten Oberfläche 6 versehen. Die Form dieser Oberfläche 6 entspricht dem später gewünschten Endprofil 2 der Abrichtrolle, sie liegt allerdings um einen Abstand x - gemessen senkrecht auf die Oberfläche 6 - zurückversetzt zum abrasiven Profil 2.

Der Grundkörper 5 bzw. genauer gesagt die Oberfläche 6 ist mit einer Schicht Abrasivpartikeln 7 belegt, die zunächst mit ihrem nach außen gerichteten Endbereich über das gewünschte abrasive Profil 2 hinausragen. Deswegen wird mittels eines Profilierwerkzeugs 8 eine Profilierung der Abrichtrolle 1 vorgenommen, wobei außenliegende Abschnitte 9 der Abrasivpartikel 7 abgetragen werden und so das gewünschte Profil 2 hergestellt wird. Auf diese Weise werden beide Flanken 10 und 11 des Profils 2 bzw. der Abrichtrolle 1 fertiggestellt. Schematisch angegeben ist der Oberflächenbereich A der Abrasivpartikel, der zum Abrichten bei der fertig gestellten Abrichtrolle vorliegt bzw. zur Verfügung steht (dargestellt ist mit "A" die Breite im Radialschnitt; in Richtung senkrecht auf die Zeichenebene ergibt sich eine entsprechende Tiefe der Abrasivpartikel, so dass insgesamt eine Fläche vorliegt).

Konzeptionell liegt damit über die gesamte radiale Erstreckung des Profils 2 im wesentlichen die gleiche Oberflächenrauheit der Abrichtrolle vor, so dass dies über das Abrichten der Schleifschnecke und das Schleifen eines Zahnrades mit derselben dann auch für das fertige Werkstück gilt. Dies allerdings ist nicht in jedem Falle gewünscht.

Ein gattungsgemäßes Verfahren ist aus der JP 2006 212726 A und aus der JP 2010 099783 A bekannt. Weitere Lösungen zeigen die DE 10 2010 045 836 A1**,** die DE 91 07 089 U1**,** die JP 2005 271127 A und die DE 199 10 746 A1**.** Manchmal gibt es Fälle, bei denen es gewünscht ist, dass sich eine variable Oberflächenrauheit der geschliffenen Zahnflanke über der Zahnhöhe ergibt. Der Erfindung liegt die **Aufgabe** zugrunde, ein gattungsgemäßes Verfahren so fortzubilden und eine entsprechende Abrichtrolle bereitzustellen, mit dem bzw. mit der es möglich ist, gezielt die Oberflächenrauheit der geschliffenen Zahnflanke über der Zahnhöhe zu beeinflussen, was erreicht werden soll, in dem der zum Einsatz kommende Materialanteil des Abrasivmaterials über der Flankenhöhe der Abrichtrolle gezielt beeinflusst wird.

Die **Lösung** dieser Aufgabe durch die Erfindung sieht ein Verfahren gemäß einem der Ansprüche 1, 2 oder 3 vor.

Die Zunahme oder Abnahme des Abstands kann dabei an beiden Flanken der zahnförmig ausgebildeten Oberfläche gleich sein.

Möglich ist es auch, dass die Herstellung des abrasiven Soll-Profils gemäß obigem Schritt c) so erfolgt, dass der Abstand zwischen der zahnförmig ausgebildeten Oberfläche und dem abrasiven Profil beim Voranschreiten vom Fußbereich zum Kopfbereich an einer Flanke der zahnförmig ausgebildeten Oberfläche zunimmt und an der anderen Flanke der zahnförmig ausgebildeten Oberfläche abnimmt.

Besagte Zunahme oder Abnahme des Abstands kann dabei beim Voranschreiten vom Fußbereich zum Kopfbereich linear erfolgen.

Sie kann aber auch nichtlinear erfolgen. Alternativ vorgesehen kann auch werden, dass die Zunahme oder Abnahme des Abstands abschnittsweise linear erfolgt, aber mit unterschiedlichen Linearitäten.

Die Abrichtrolle zum Abrichten einer Schleifschnecke, die einen scheibenförmigen Grundkörper mit einer profilierten, im Radialschnitt zumindest abschnittsweise zahnförmig ausgebildeten Oberfläche aufweist, wobei sich die Oberfläche radial von einem Fußbereich bis zu einem Kopfbereich erstreckt und wobei die Oberfläche mit einer Lage Abrasivpartikel versehen ist, wobei außenliegende Endbereiche der Abrasivpartikel ein abrasives Profil bilden, zeichnet sich dadurch aus, dass die Abrasivpartikel zur Bildung des abrasiven Profils einen Oberflächenbereich bilden, dessen Größe sich beim Voranschreiten vom Fußbereich zum Kopfbereich (zumindest an einer Flanke der zahnförmig ausgebildeten Oberfläche) ändert.

Die vorliegende Erfindung stellt somit ein Verfahren zur Herstellung einer Abrichtrolle bereit, um mit der Rolle in einer solchen Weise eine abrichtbare Schleifschnecke abrichten zu können, so dass mit dieser die Erzeugung einer variablen Oberflächenrauheit entlang der Zahnhöhe eines zahnradförmigen Werkstückes möglich wird.

Dabei wird es möglich, ein Werkzeug (Abrichtrolle) zum Abrichten einer abrichtbaren Schleifschnecke mit einem variablen Materialanteil entlang der Flankenhöhe bereitzustellen, damit auch die abrichtbare Schleifschnecke mit einem variablen Materialanteil entlang der Flankenhöhe erzeugt wird und damit dann weiterhin eine variable Oberflächenrauheit entlang der Zahnhöhe eines zu schleifenden Werkstückes produziert werden kann.

Mit der vorgeschlagenen Lösung ist es somit möglich, dass bestimmte Wünsche bzw. Vorgaben hinsichtlich der Oberfläche der Flanke einer Verzahnung erfüllt werden können; namentlich kann die Zahnflanke so bearbeitet werden, dass sich die Oberflächenrauheit entlang der Zahnhöhe in einer gewünschten Weise ergibt. Hierzu wird das erfindungsgemäße

Verfahren mit einem gezielten variablen Materialanteil entlang der Flankenhöhe als Vorgabe eingesetzt.

Zusammengefasst kann man das Erfindungskonzept nochmals wie folgt formulieren:
Bei der Auslegung des Grundkörpers der Abrichtrolle wird also ein bewusst "falsches" Werkzeugprofil als Basis hinterlegt. Nach dem Belegen des Grundkörpers mit einer Schicht Abrasivkörner (d. h. insbesondere mit Bornitrid- (CBN) oder Diamantkörnern gleicher Größe und/oder Körnung) wird das Abrichtwerkzeug (Abrichtrolle) mit einer (Diamant)Schleifscheibe wie erläutert nachbearbeitet. Die Nachbearbeitung erfolgt aber nicht mit einem äquidistanten Abstand zwischen dem Profil des Grundkörpers und dem zu erzeugenden Abrasivprofil, sondern entsprechend dem "richtigen" Soll-Profil. Am Ende des Prozesses liegen somit die Flankenlinien des Grundkörpers einerseits und das nachbearbeitete Profil der Lage Abrasivkörner andererseits nicht parallel zueinander. Ausgehend davon, dass alle Abrasivkörner, die die Lage auf dem Grundkörper bilden, die gleiche Korngröße aufweisen, d. h. etwa gleiche Abmessungen haben, werden die einzelnen Abrasivkörner demgemäß bei der Nachbearbeitung unterschiedlich stark abgetragen.

Es sei zur Klarstellung angemerkt, dass auch bei Wahl eines definierten Korndurchmessers für die Beschichtung des Grundkörpers immer nur ein gewisser Durchmesserbereich für die Körner vorliegt, d. h. diese haben nie genau denselben Durchmesser; dies ist aber nicht hinderlich. Im Gegenteil kann es vorteilhaft sein, insofern auf ein Mischkorn zurückzugreifen, das Körner eines gewissen Durchmesserbereichs umfasst.

Dadurch entstehen in unterschiedlichen Bereichen der Abrichtrollenoberfläche entlang der Flankenhöhe unterschiedliche Werte für den die Schneidfläche bildenden Materialanteil.

Beim Abrichten der Schleifschnecke wird dann in der Konsequenz das Abrichtwerkzeugprofil mit variablem Materialanteil in jedem Gang der Schleifschnecke entsprechend abgebildet. Beim Schleifen findet dann die weitere Übertragung des variablen Materialanteils auf die Zahnflanken der Verzahnung des zu schleifenden Werkstücks statt.

Das vorgeschlagene Konzept kann dabei natürlich sowohl beim Abrichten einer eingängigen als auch beim Abrichten einer mehrgängigen Schleifschnecke eingesetzt werden.

In den Zeichnungen sind Ausführungsbeispiele der Erfindung dargestellt. Es zeigen:
- Fig. 1: schematisch den Radialschnitt einer Abrichtrolle zum Abrichten einer Schleifschnecke, wobei das Vorgehen gemäß dem Stand der Technik illustriert ist,
- Fig. 2: schematisch den Radialschnitt einer Abrichtrolle zum Abrichten der Schleifschnecke, wobei das Vorgehen gemäß der Erfindung nach einem ersten Ausführungsbeispiel illustriert ist,
- Fig. 3: in der Darstellung gemäß Figur 2 ein zweites Ausführungsbeispiel gemäß der Erfindung,
- Fig. 4: in der Darstellung gemäß Figur 2 ein drittes Ausführungsbeispiel gemäß der Erfindung,
- Fig. 5: in der Darstellung gemäß Figur 2 ein viertes Ausführungsbeispiel gemäß der Erfindung und
- Fig. 6: in der Darstellung gemäß Figur 2 ein fünftes Ausführungsbeispiel gemäß der Erfindung.

Aus dem Vergleich der Figuren 1 (Lösung gemäß dem Stand der Technik) und 2 (erfindungsgemäße Ausführungsform) lässt sich das Prinzip der vorliegenden Erfindung wie folgt erläutern:
Zunächst wird eine Abrichtrolle 1 dadurch hergestellt, dass zunächst ein Grundkörper 5 (bestehend aus massivem Stahl) profiliert wird. Dabei wird der zahnförmige Bereich zwischen dem Fußbereich 3 und dem Kopfbereich 4 mit einer profilierten Oberfläche 6 versehen. Auf diese Oberfläche 6 wird dann eine Lage Abrasivpartikel 7 aufgebracht und mittels galvanisch abgeschiedenen Materials auf dem Grundkörper 5 fixiert. Die einzelnen Abrasivpartikel 7 haben im wesentlichen dieselbe Größe und bilden folglich über der Oberfläche 6 eine Schicht mit konstanter Dicke.

Beim sich anschließenden Profilieren der Abrichtrolle 1 mittels eines Profilierwerkzeugs 8 werden dann außenliegende Abschnitte 9 der Abrasivpartikel 7 abgetragen, so dass sich das für das Abrichten einer Schleifschnecke benötigte abrasive Profil 2 ergibt.

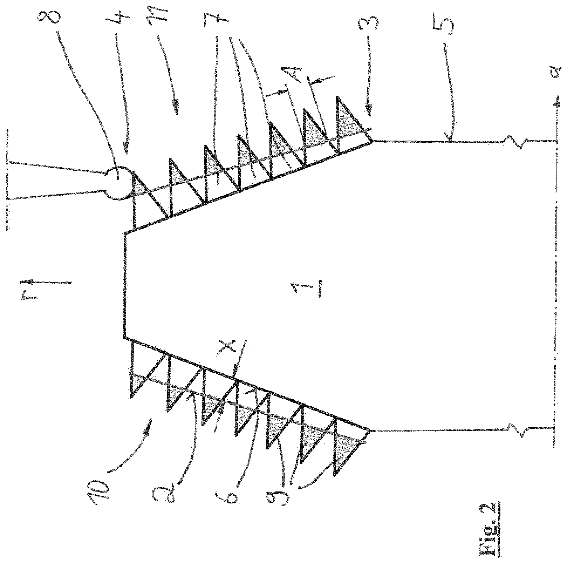

Wesentlich ist dabei, dass besagte Herstellung der profilierten Oberfläche 6 so erfolgt, dass sich der Abstand x zwischen der profilierten Oberfläche 6 und dem abrasiven Profil 2 (Endprofil) zumindest an einer Flanke 10 bzw. 11 der zahnförmig ausgebildeten Oberfläche 6 - gemessen im Radialschnitt senkrecht auf die profilierte Oberfläche - beim Voranschreiten vom Fußbereich 3 zum Kopfbereich 4 ändert. In Figur 2 ist dies dadurch leicht zu erkennen, dass die hier im Radialschnitt exemplarisch gerade ausgebildeten Verläufe der Oberfläche 6 und des abrasiven Profils 2 nicht parallel sondern unter einem Winkel zueinander verlaufen. Dies ist bei der Lösung gemäß dem Stand der Technik nicht der Fall; hier verlaufen die Oberfläche 6 und das Profil 2 parallel zueinander.

Die Konsequenz dieses Vorgehens ist, dass die nach dem Profilieren der Abrichtrolle 1 vorliegenden Schneidbereiche der Abrasivpartikel 7 über der Zahnhöhe unterschiedliche Oberflächenbereiche A aufweisen. Im Ausführungsbeispiel nach Figur 2 ist besagter Oberflächenbereich für die radial innen liegenden Abrasivpartikel 7 größer als für die radial außen liegenden Partikel.

In den weiteren Figuren sind Variationen des Ausführungsbeispiels gemäß Figur 2 zu sehen.

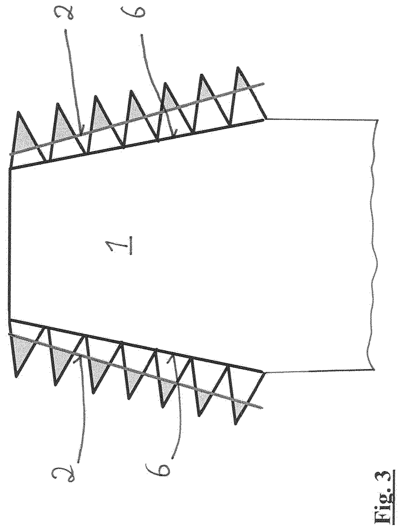

Bei der Lösung gemäß Figur 3 ist vorgesehen, dass gleichermaßen ein winkeliger Verlauf zwischen der Oberfläche 6 und dem Profil 2 gegeben ist, wobei jetzt allerdings die Oberflächenbereiche A radial nach außen hin zunehmen (bei Figur 2 nahmen sie ab).

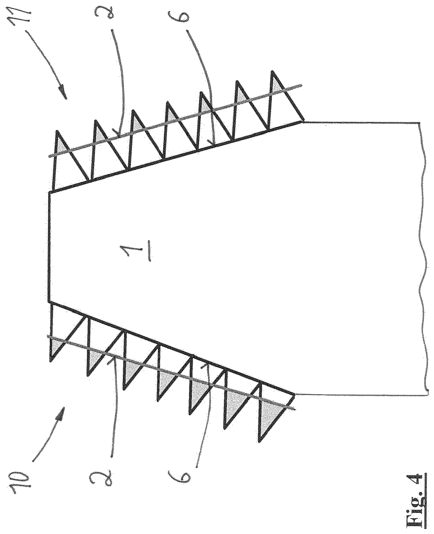

Figur 4 illustriert, dass die vorgeschlagene Maßnahme nicht zwingend auf beiden Flanken 10 und 11 in gleicher Weise umgesetzt werden muss. Vielmehr weist hier lediglich die Flanke 10 die erfindungsgemäße Ausgestaltung auf, während die Flanke 11 nach dem Stand der Technik (siehe Figur 1) ausgeführt ist.

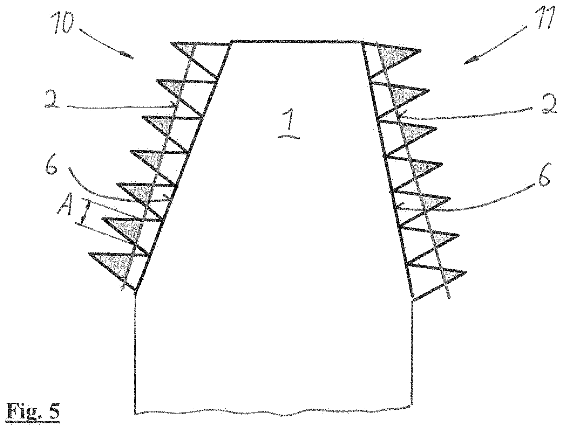

In Figur 5 kann gesehen werden, dass die Zu- bzw. Abnahme der Oberflächenbereiche A an den beiden Flanken 10 und 11 unterschiedlich orientiert sein kann: Während an der Flanke 10 mit radial zunehmendem Abstand von der Drehachse a (siehe Figur 2) der Oberflächenbereich A abnimmt, nimmt er an der Flanke 11 zu.

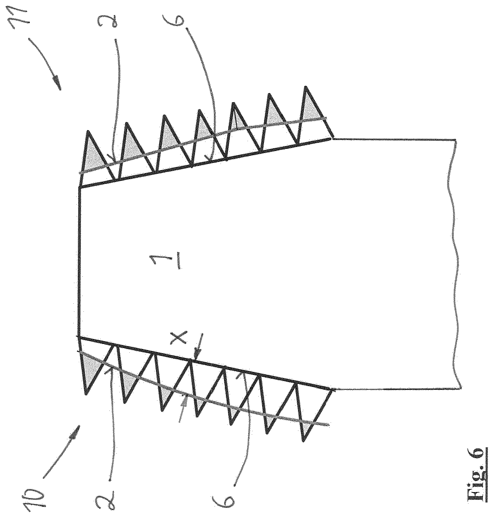

Schließlich zeigt Figur 6, dass der Abstand x zwischen der profilierten Oberfläche 6 und dem abrasiven Profil 2 nicht zwingend linear zu- bzw. abnehmen muss. An der Flanke 10 ist für den Abstand x über die Zahnhöhe ein balliger (parabolischer) Verlauf vorgesehen. An der Flanke 11 sind segmentierte Bereiche vorgesehen, binnen derer ein linearer Verlauf für die Zu- bzw. Abnahme des Abstands x gegeben ist, allerdings gegensinnig orientiert.

### Bezugszeichenliste:

- 1: Abrichtrolle
- 2: abrasives Profil der Abrichtrolle
- 3: Fußbereich
- 4: Kopfbereich
- 5: Grundkörper der Abrichtrolle
- 6: profilierte Oberfläche des Grundkörpers
- 7: Abrasivpartikel (Diamantkörner / CBN-Körner)
- 8: Profilierwerkzeug
- 9: außenliegende Abschnitte der Abrasivpartikel
- 10: Flanke der Oberfläche
- 11: Flanke der Oberfläche

- r: radiale Richtung
- x: Abstand zwischen profilierter Oberfläche und abrasivem Profil
- A: Oberflächenbereich
- a: Drehachse

## Patentansprüche

1. Verfahren zum Abrichten einer Schleifschnecke mittels einer Abrichtrolle (1), bei dem die mit einem abrasiven Profil (2) versehene Abrichtrolle (1) in Eingriff mit der Schleifschnecke gebracht wird, um deren schneckenförmiges Schleifprofil zu profilieren, wobei das abrasive Profil (2) der Abrichtrolle (1) im Radialschnitt zumindest abschnittsweise zahnförmig ausgebildet ist und sich radial (r) von einem Fußbereich (3) bis zu einem Kopfbereich (4) erstreckt, wobei die Abrichtrolle (1) erzeugt wird durch die Schritte: a) Herstellen eines scheibenförmigen Grundkörpers (5), wobei der Grundkörper (5) mit einer profilierten, im Radialschnitt zumindest abschnittsweise zahnförmig ausgebildeten Oberfläche (6) für die Aufnahme einer Lage von Abrasivpartikeln (7) versehen wird, b) Anordnen einer Lage von Abrasivpartikeln (7) auf der profilierten Oberfläche (6) des Grundkörpers (5), c) Profilieren des mit Abrasivpartikeln (7) versehenen Grundkörpers (4), indem mit einem Profilierwerkzeug (8) außenliegende Abschnitte (9) der Abrasivpartikel (7) so entfernt werden, dass sich das abrasive Soll-Profil (2) der Abrichtrolle (1) ergibt, **dadurch gekennzeichnet, dass** die Herstellung des abrasiven Soll-Profils (2) gemäß Schritt c) so erfolgt, dass sich der Abstand (x) zwischen der zahnförmig ausgebildeten Oberfläche (6) und dem abrasiven Soll-Profil (2) zumindest an einer Flanke (10, 11) der zahnförmig ausgebildeten Oberfläche (6), gemessen im Radialschnitt senkrecht auf die zahnförmig ausgebildete Oberfläche (6), beim Voranschreiten vom Fußbereich (3) zum Kopfbereich (4) ändert, wobei die Herstellung des abrasiven Soll-Profils (2) gemäß Schritt c) so erfolgt, dass der Abstand (x) zwischen der zahnförmig ausgebildeten Oberfläche (6) und dem abrasiven Soll-Profil (2), gemessen im Radialschnitt senkrecht auf die zahnförmig ausgebildete Oberfläche (6), beim Voranschreiten vom Fußbereich (3) zum Kopfbereich (4) zunimmt.

2. Verfahren zum Abrichten einer Schleifschnecke mittels einer Abrichtrolle (1), bei dem die mit einem abrasiven Profil (2) versehene Abrichtrolle (1) in Eingriff mit der Schleifschnecke gebracht wird, um deren schneckenförmiges Schleifprofil zu profilieren, wobei das abrasive Profil (2) der Abrichtrolle (1) im Radialschnitt zumindest abschnittsweise zahnförmig ausgebildet ist und sich radial (r) von einem Fußbereich (3) bis zu einem Kopfbereich (4) erstreckt, wobei die Abrichtrolle (1) erzeugt wird durch die Schritte: a) Herstellen eines scheibenförmigen Grundkörpers (5), wobei der Grundkörper (5) mit einer profilierten, im Radialschnitt zumindest abschnittsweise zahnförmig ausgebildeten Oberfläche (6) für die Aufnahme einer Lage von Abrasivpartikeln (7) versehen wird, b) Anordnen einer Lage von Abrasivpartikeln (7) auf der profilierten Oberfläche (6) des Grundkörpers (5), c) Profilieren des mit Abrasivpartikeln (7) versehenen Grundkörpers (4), indem mit einem Profilierwerkzeug (8) außenliegende Abschnitte (9) der Abrasivpartikel (7) so entfernt werden, dass sich das abrasive Soll-Profil (2) der Abrichtrolle (1) ergibt, **dadurch gekennzeichnet, dass** die Herstellung des abrasiven Soll-Profils (2) gemäß Schritt c) so erfolgt, dass sich der Abstand (x) zwischen der zahnförmig ausgebildeten Oberfläche (6) und dem abrasiven Soll-Profil (2) zumindest an einer Flanke (10, 11) der zahnförmig ausgebildeten Oberfläche (6), gemessen im Radialschnitt senkrecht auf die zahnförmig ausgebildete Oberfläche (6), beim Voranschreiten vom Fußbereich (3) zum Kopfbereich (4) ändert, wobei die Herstellung des abrasiven Soll-Profils (2) gemäß Schritt c) so erfolgt, dass der Abstand (x) zwischen der zahnförmig ausgebildeten Oberfläche (6) und dem abrasiven Soll-Profil (2), gemessen im Radialschnitt senkrecht auf die zahnförmig ausgebildete Oberfläche (6), beim Voranschreiten vom Fußbereich (3) zum Kopfbereich (4) abnimmt.

3. Verfahren zum Abrichten einer Schleifschnecke mittels einer Abrichtrolle (1), bei dem die mit einem abrasiven Profil (2) versehene Abrichtrolle (1) in Eingriff mit der Schleifschnecke gebracht wird, um deren schneckenförmiges Schleifprofil zu profilieren, wobei das abrasive Profil (2) der Abrichtrolle (1) im Radialschnitt zumindest abschnittsweise zahnförmig ausgebildet ist und sich radial (r) von einem Fußbereich (3) bis zu einem Kopfbereich (4) erstreckt, wobei die Abrichtrolle (1) erzeugt wird durch die Schritte: a) Herstellen eines scheibenförmigen Grundkörpers (5), wobei der Grundkörper (5) mit einer profilierten, im Radialschnitt zumindest abschnittsweise zahnförmig ausgebildeten Oberfläche (6) für die Aufnahme einer Lage von Abrasivpartikeln (7) versehen wird, b) Anordnen einer Lage von Abrasivpartikeln (7) auf der profilierten Oberfläche (6) des Grundkörpers (5), c) Profilieren des mit Abrasivpartikeln (7) versehenen Grundkörpers (4), indem mit einem Profilierwerkzeug (8) außenliegende Abschnitte (9) der Abrasivpartikel (7) so entfernt werden, dass sich das abrasive Soll-Profil (2) der Abrichtrolle (1) ergibt, **dadurch gekennzeichnet, dass** die Herstellung des abrasiven Soll-Profils (2) gemäß Schritt c) so erfolgt, dass sich der Abstand (x) zwischen der zahnförmig ausgebildeten Oberfläche (6) und dem abrasiven Soll-Profil (2) zumindest an einer Flanke (10, 11) der zahnförmig ausgebildeten Oberfläche (6), gemessen im Radialschnitt senkrecht auf die zahnförmig ausgebildete Oberfläche (6), beim Voranschreiten vom Fußbereich (3) zum Kopfbereich (4) ändert, wobei die Herstellung des abrasiven Soll-Profils (2) gemäß Schritt c) so erfolgt, dass sich für der Abstand (x) zwischen der zahnförmig ausgebildeten Oberfläche (6) und dem abrasiven Soll-Profil (2), gemessen im Radialschnitt senkrecht auf die zahnförmig ausgebildete Oberfläche (6), beim Voranschreiten vom Fußbereich (3) zum Kopfbereich (4) ein balliger Verlauf ergibt.

4. Verfahren nach einem der Ansprüche 1 oder 2, **dadurch gekennzeichnet, dass** die Zunahme oder Abnahme des Abstands (x) an beiden Flanken (10, 11) der zahnförmig ausgebildeten Oberfläche (6) gleich ist.

5. Verfahren nach einem der Ansprüche 1 oder 2, **dadurch gekennzeichnet, dass** die Herstellung des abrasiven Soll-Profils (2) gemäß Schritt c) so erfolgt, dass der Abstand (x) zwischen der zahnförmig ausgebildeten Oberfläche (6) und dem abrasiven Soll-Profil (2), gemessen im Radialschnitt senkrecht auf die zahnförmig ausgebildete Oberfläche (6), beim Voranschreiten vom Fußbereich (3) zum Kopfbereich (4) an einer Flanke (10) der zahnförmig ausgebildeten Oberfläche (6) zunimmt und an der anderen Flanke (11) der zahnförmig ausgebildeten Oberfläche (6) abnimmt.

6. Verfahren nach einem der Ansprüche 1, 2, 4 und 5, **dadurch gekennzeichnet, dass** die Zunahme oder Abnahme des Abstands (x) beim Voranschreiten vom Fußbereich (3) zum Kopfbereich (4) linear erfolgt. 4

7. Verfahren nach einem der Ansprüche 1, 2, 4 und 5, **dadurch gekennzeichnet, dass** die Zunahme oder Abnahme des Abstands (x) beim Voranschreiten vom Fußbereich (3) zum Kopfbereich (4) nichtlinear erfolgt.

8. Verfahren nach Anspruch 7, **dadurch gekennzeichnet, dass** die Zunahme oder Abnahme des Abstands (x) abschnittsweise linear erfolgt, aber mit unterschiedlichen Linearitäten.

## Claims

1. Method for dressing of a grinding worm by means of a dressing roll (1) in which the dressing roll (1), which is provided with an abrasive profile (2), is brought into engagement with the grinding worm to profile its helical grinding profile, wherein the abrasive profile (2) of the dressing roll (1) is at least partially designed tooth-shaped in a radial cross section and extends radially (r) from a root region (3) to a tip region (4), wherein the dressing roll (1) is produced by the steps:
a) Producing of a disk-shaped base body (5), wherein the base body (5) is provided with a profiled surface (6) for the reception of a layer of abrasive particles (7), wherein the surface (6) is at least partially tooth-shaped in a radial cross section,
b) Positioning of a layer of abrasive particles (7) on the profiled surface (6) of the base body (5),
c) Profiling of the base body (4) which is provided with abrasive particles (7) by removing outer sections (9) of the abrasive particles (7) with a profiling tool (8) in such a manner that the abrasive desired profile (2) of the dressing roll (1) is created,
**characterized in that**
the production of the abrasive desired profile (2) according to step c) takes place in such a manner that the distance (x) between the tooth-shaped surface (6) and the abrasive profile (2) is changing during advancing from the root region (3) to the tip region (4) at least at one flank (10, 11) of the tooth-shaped surface (6), measured in the radial cross section perpendicular to the tooth-shaped surface (6), wherein the production of the abrasive desired profile (2) according to step c) takes place in such a manner that the distance (x) between the tooth-shaped surface (6) and the abrasive profile (2) is increasing during advancing from the root region (3) to the tip region (4), measured in the radial cross section perpendicular to the tooth-shaped surface (6).

2. Method for dressing of a grinding worm by means of a dressing roll (1) in which the dressing roll (1), which is provided with an abrasive profile (2), is brought into engagement with the grinding worm to profile its helical grinding profile, wherein the abrasive profile (2) of the dressing roll (1) is at least partially designed tooth-shaped in a radial cross section and extends radially (r) from a root region (3) to a tip region (4), wherein the dressing roll (1) is produced by the steps:
a) Producing of a disk-shaped base body (5), wherein the base body (5) is provided with a profiled surface (6) for the reception of a layer of abrasive particles (7), wherein the surface (6) is at least partially tooth-shaped in a radial cross section,
b) Positioning of a layer of abrasive particles (7) on the profiled surface (6) of the base body (5),
c) Profiling of the base body (4) which is provided with abrasive particles (7) by removing outer sections (9) of the abrasive particles (7) with a profiling tool (8) in such a manner that the abrasive desired profile (2) of the dressing roll (1) is created,
**characterized in that**
the production of the abrasive desired profile (2) according to step c) takes place in such a manner that the distance (x) between the tooth-shaped surface (6) and the abrasive profile (2) is changing during advancing from the root region (3) to the tip region (4) at least at one flank (10, 11) of the tooth-shaped surface (6), measured in the radial cross section perpendicular to the tooth-shaped surface (6), wherein the production of the abrasive desired profile (2) according to step c) takes place in such a manner that the distance (x) between the tooth-shaped surface (6) and the abrasive profile (2) is decreasing during advancing from the root region (3) to the tip region (4), measured in the radial cross section perpendicular to the tooth-shaped surface (6).

3. Method for dressing of a grinding worm by means of a dressing roll (1) in which the dressing roll (1), which is provided with an abrasive profile (2), is brought into engagement with the grinding worm to profile its helical grinding profile, wherein the abrasive profile (2) of the dressing roll (1) is at least partially designed tooth-shaped in a radial cross section and extends radially (r) from a root region (3) to a tip region (4), wherein the dressing roll (1) is produced by the steps:
a) Producing of a disk-shaped base body (5), wherein the base body (5) is provided with a profiled surface (6) for the reception of a layer of abrasive particles (7), wherein the surface (6) is at least partially tooth-shaped in a radial cross section,
b) Positioning of a layer of abrasive particles (7) on the profiled surface (6) of the base body (5),
c) Profiling of the base body (4) which is provided with abrasive particles (7) by removing outer sections (9) of the abrasive particles (7) with a profiling tool (8) in such a manner that the abrasive desired profile (2) of the dressing roll (1) is created,
**characterized in that**
the production of the abrasive desired profile (2) according to step c) takes place in such a manner that the distance (x) between the tooth-shaped surface (6) and the abrasive profile (2) is changing during advancing from the root region (3) to the tip region (4) at least at one flank (10, 11) of the tooth-shaped surface (6), measured in the radial cross section perpendicular to the tooth-shaped surface (6), wherein the production of the abrasive desired profile (2) according to step c) takes place in such a manner that for the distance (x) between the tooth-shaped surface (6) and the abrasive profile (2) a convex design is obtained during advancing from the root region (3) to the tip region (4), measured in the radial cross section perpendicular to the tooth-shaped surface (6).

4. Method according to one of claims 1 or 2, **characterized in that** the increase or the decrease of the distance (x) at both flanks (10, 11) of the tooth-shaped surface (6) is equal.

5. Method according to one of claims 1 or 2, **characterized in that** the production of the abrasive desired profile (2) according to step c) is taking place in such a manner that the distance (x) between the tooth-shaped surface (6) and the abrasive profile (2) is increasing at one flank (10) of the tooth-shaped surface (6) and is decreasing at the other flank (11) of the tooth-shaped surface (6) during advancing from the root region (3) to the tip region (4), measured in the radial cross section perpendicular to the profiled surface (6).

6. Method according to one of claims 1, 2, 4 and 5, **characterized in that** the increase or the decrease of the distance (x) takes place linear during advancing from the root region (3) to the tip region (4).

7. Method according to one of claims 1, 2, 4 and 5, **characterized in that** the increase or the decrease of the distance (x) takes place non-linear during advancing from the root region (3) to the tip region (4).

8. Method according to claim 7, **characterized in that** the increase or the decrease of the distance (x) takes place in sections linear but with different linearity.

## Revendications

1. Procédé de dressage d'une meule à vis au moyen d'une roulette de dressage (1), selon lequel la roulette de dressage (1) munie d'un profil abrasif (2) est mise en prise avec la meule à vis afin de profiler son profil de meulage en forme de vis, le profil abrasif (2) de la roulette de dressage (1) étant configuré au moins en sections sous forme dentée dans la coupe radiale et s'étendant radialement (r) d'une zone de pied (3) jusqu'à une zone de tête (4), la roulette de dressage (1) étant produite par les étapes suivantes : a) la fabrication d'un corps de base en forme de plaque (5), le corps de base (5) étant muni d'une surface profilée (6), configurée au moins en sections sous forme dentée dans la coupe radiale, pour la réception d'une couche de particules abrasives (7), b) l'agencement d'une couche de particules abrasives (7) sur la surface profilée (6) du corps de base (5), c) le profilage du corps de base (4) muni de particules abrasives (7), par le fait que des sections extérieures (9) des particules abrasives (7) sont éliminées avec un outil de profilage (8), de telle sorte que le profil abrasif de consigne (2) de la roulette de dressage (1) est obtenu, **caractérisé en ce que** la fabrication du profil abrasif de consigne (2) a lieu selon l'étape c) de telle sorte que la distance (x) entre la surface configurée sous forme dentée (6) et le profil abrasif de consigne (2) au moins au niveau d'un flanc (10, 11) de la surface configurée sous forme dentée (6), mesurée dans la coupe radiale perpendiculairement à la surface configurée sous forme dentée (6), se modifie lors de la progression de la zone de pied (3) à la zone de tête (4), la fabrication du profil abrasif de consigne (2) ayant lieu selon l'étape c) de telle sorte que la distance (x) entre la surface configurée sous forme dentée (6) et le profil abrasif de consigne (2), mesurée dans la coupe radiale perpendiculairement à la surface configurée sous forme dentée (6), augmente lors de la progression de la zone de pied (3) à la zone de tête (4).

2. Procédé de dressage d'une meule à vis au moyen d'une roulette de dressage (1), selon lequel la roulette de dressage (1) munie d'un profil abrasif (2) est mise en prise avec la meule à vis afin de profiler son profil de meulage en forme de vis, le profil abrasif (2) de la roulette de dressage (1) étant configuré au moins en sections sous forme dentée dans la coupe radiale et s'étendant radialement (r) d'une zone de pied (3) jusqu'à une zone de tête (4), la roulette de dressage (1) étant produite par les étapes suivantes : a) la fabrication d'un corps de base en forme de plaque (5), le corps de base (5) étant muni d'une surface profilée (6), configurée au moins en sections sous forme dentée dans la coupe radiale, pour la réception d'une couche de particules abrasives (7), b) l'agencement d'une couche de particules abrasives (7) sur la surface profilée (6) du corps de base (5), c) le profilage du corps de base (4) muni de particules abrasives (7), par le fait que des sections extérieures (9) des particules abrasives (7) sont éliminées avec un outil de profilage (8), de telle sorte que le profil abrasif de consigne (2) de la roulette de dressage (1) est obtenu, **caractérisé en ce que** la fabrication du profil abrasif de consigne (2) a lieu selon l'étape c) de telle sorte que la distance (x) entre la surface configurée sous forme dentée (6) et le profil abrasif de consigne (2) au moins au niveau d'un flanc (10, 11) de la surface configurée sous forme dentée (6), mesurée dans la coupe radiale perpendiculairement à la surface configurée sous forme dentée (6), se modifie lors de la progression de la zone de pied (3) à la zone de tête (4), la fabrication du profil abrasif de consigne (2) ayant lieu selon l'étape c) de telle sorte que la distance (x) entre la surface configurée sous forme dentée (6) et le profil abrasif de consigne (2), mesurée dans la coupe radiale perpendiculairement à la surface configurée sous forme dentée (6), diminue lors de la progression de la zone de pied (3) à la zone de tête (4).

3. Procédé de dressage d'une meule à vis au moyen d'une roulette de dressage (1), selon lequel la roulette de dressage (1) munie d'un profil abrasif (2) est mise en prise avec la meule à vis afin de profiler son profil de meulage en forme de vis, le profil abrasif (2) de la roulette de dressage (1) étant configuré au moins en sections sous forme dentée dans la coupe radiale et s'étendant radialement (r) d'une zone de pied (3) jusqu'à une zone de tête (4), la roulette de dressage (1) étant produite par les étapes suivantes : a) la fabrication d'un corps de base en forme de plaque (5), le corps de base (5) étant muni d'une surface profilée (6), configurée au moins en sections sous forme dentée dans la coupe radiale, pour la réception d'une couche de particules abrasives (7), b) l'agencement d'une couche de particules abrasives (7) sur la surface profilée (6) du corps de base (5), c) le profilage du corps de base (4) muni de particules abrasives (7), par le fait que des sections extérieures (9) des particules abrasives (7) sont éliminées avec un outil de profilage (8), de telle sorte que le profil abrasif de consigne (2) de la roulette de dressage (1) est obtenu, **caractérisé en ce que** la fabrication du profil abrasif de consigne (2) a lieu selon l'étape c) de telle sorte que la distance (x) entre la surface configurée sous forme dentée (6) et le profil abrasif de consigne (2) au moins au niveau d'un flanc (10, 11) de la surface configurée sous forme dentée (6), mesurée dans la coupe radiale perpendiculairement à la surface configurée sous forme dentée (6), se modifie lors de la progression de la zone de pied (3) à la zone de tête (4), la fabrication du profil abrasif de consigne (2) ayant lieu selon l'étape c) de telle sorte que la distance (x) entre la surface configurée sous forme dentée (6) et le profil abrasif de consigne (2), mesurée dans la coupe radiale perpendiculairement à la surface configurée sous forme dentée (6), présente une évolution convexe lors de la progression de la zone de pied (3) à la zone de tête (4).

4. Procédé selon l'une quelconque des revendications 1 ou 2, **caractérisé en ce que** l'augmentation ou la diminution de la distance (x) est identique sur les deux flancs (10, 11) de la surface configurée sous forme dentée (6).

5. Procédé selon l'une quelconque des revendications 1 ou 2, **caractérisé en ce que** la fabrication du profil abrasif de consigne (2) a lieu selon l'étape c) de telle sorte que la distance (x) entre la surface configurée sous forme dentée (6) et le profil abrasif de consigne (2), mesurée dans la coupe radiale perpendiculairement à la surface configurée sous forme dentée (6), augmente au niveau d'un flanc (10) de la surface configurée sous forme dentée (6) et diminue au niveau de l'autre flanc (11) de la surface configurée sous forme dentée (6) lors de la progression de la zone de pied (3) à la zone de tête (4).

6. Procédé selon l'une quelconque des revendications 1, 2, 4 et 5, **caractérisé en ce que** l'augmentation ou la diminution de la distance (x) lors de la progression de la zone de pied (3) à la zone de tête (4) a lieu de manière linéaire.

7. Procédé selon l'une quelconque des revendications 1, 2, 4 et 5, **caractérisé en ce que** l'augmentation ou la diminution de la distance (x) lors de la progression de la zone de pied (3) à la zone de tête (4) a lieu de manière non linéaire.

8. Procédé selon la revendication 7, **caractérisé en ce que** l'augmentation ou la diminution de la distance (x) a lieu de manière linéaire en sections, mais avec des linéarités différentes.
